# EUROPÄISCHE PATENTSCHRIFT

(11) **EP 1 352 227 B1**
(45) Veröffentlichungstag und Bekanntmachung des Hinweises auf die Patenterteilung: **28.11.2007**
(21) Anmeldenummer: 02711776.1
(22) Anmeldetag: 14.01.2002
(51) Int. Cl.: G01N 1/31, G02B 21/34, C03B 33/12

(54) **GLASSCHNEIDEGERÄT FÜR OBJEKTTRÄGER**
GLASS CUTTING DEVICE FOR AN OBJECT CARRIER
COUPE-VERRE POUR LAMES PORTE-OBJETS

(30) Priorität: 18.01.2001 DE 10102134
(43) Veröffentlichungstag der Anmeldung: 15.10.2003
(73) Patentinhaber: Viebahn, Christoph, 53127 Bonn (DE)
(72) Erfinder: VIEBAHN, Christoph, 37075 Göttingen (DE); GRANITZA, Klaus, 53757 St. Augustin (DE)
(74) Vertreter: Bonsmann, Manfred
(86) Internationale Anmeldenummer: PCT/DE2002/000085
(87) Internationale Veröffentlichungsnummer: WO 2002/057747

(56) Entgegenhaltungen:
- WO-A-01/79911
- WO-A-95/23960
- WO-A-97/29355
- DE-C- 19 516 713
- US-A- 4 220 273

## Beschreibung

Die Erfindung betrifft eine Vorrichtung entsprechend dem Oberbegriff des Patentanspruches 1 sowie ein Verfahren gemäß dem Oberbegriff des Patentanspruches 9. Die Vorrichtung wird eingesetzt bei der Aufbereitung von mikroskopischen Proben für die biochemische oder histochemische Analyse.

Biochemische und histochemische Färbemethoden im Sinne dieser Erfindung, z.B. die sog. In-situ-Hybridisierung, machen die Aktivität (Expression) der Erbsubstanz (DNA, Gene) in normalen, pathologischen und sich entwickelnden Zellen und Geweben auf mikroskopischer und makroskopischer Ebene sichtbar. Diese Färbemethoden sind damit ein Grundpfeiler für den Fortschritt in der biomedizinischen Forschung und in der klinischen Medizin. Mit der vollständigen Sequenzierung des humanen Genoms, die in naher Zukunft abgeschlossen sein soll, werden allein beim Menschen etwa 100.000 zusätzliche Gene bekannt sein. Aus dieser Zahl und aus der interindividuellen Variation der Gene ergibt sich ein wachsender, in seinem Umfang noch nicht zu überblickender Bedarf an zusätzlicher Analysekapazität, der nur durch wesentliche Vereinfachungen und durch die Erhöhung der Zuverlässigkeit des gegenwärtig üblichen Färbeprozesses befriedigt werden kann.

### Stand der Technik

Biologische Proben (Zellen, Teile von Zellen, und dünne Gewebeschnitte) werden in der biomedizinischen Forschung und Diagnostik für die mikroskopische Untersuchung routinemäßig auf 26 x 76 x 1 mm große sog. Objektträger (meist aus Glas) aufgebracht und je nach Fragestellung mit spezifischen, in geeigneter Form gelösten Farbstoffen zytologischhistologisch gefärbt oder kontrastiert. Im Gegensatz zu konventionellen Färbeverfahren (z.B. Haematoxilin-Eosin-Färbung) besteht die für die Genexpressionanalsyse notwendige In-situ-Hybridisierungstechnik aus verschiedenen, bis zu 24 h dauernden Inkubationen und Waschschritten. In einem vollständigen Färbeablauf werden bis zu 40 Waschschritte auf 2 bis 4 Tage verteilt durchgeführt. Die Reproduzierbarkeit der Methode wird dadurch erschwert, dass Empfindlichkeit und Spezifität des Reaktionssignals von der genauen Einhaltung hoher Temperaturen (z.B. 70° C) und Lösungsmittelkonzentrationen (z.B. 50% Formamid) insbesondere während der langen Inkubationsschritte abhängig sind. Darüber hinaus sind die einzusetzenden Lösungen (z.B. die sog. RNA-Probe und der Hybridisierungspuffer) teuer in der Herstellung und können wirtschaftlich nur in kleinen Volumina (wenige µl bzw. ml) eingesetzt werden. Wegen der hohen Arbeitsintensivität der Methode sind bereits Apparate für die halb- oder vollautomatisierte In-situ-Hybridisierung entwickelt worden; sie ermöglichen entweder die In-situ-Hybridisierung an ganzen Gewebsstücken (sog. "whole mounts"; vgl. DE 196 50 880) oder es handelt sich um Adaptationen von immunhistochemischen Färbeapparaten (vgl. EP 0 489 076 und WO 94 23 326) für die Bearbeitung von dünnen Gewebeschnitten auf herkömmlichen Objektträgern. Eine Vorrichtung zum Abtrennen von Teilbereichen aus Probenträgerplatten aus Kunststoff ist bekannt (DE 195 16 713 C1). Des Weiteren sind Vorrichtungen und Verfahren bekannt, um Teilbereiche einer Probe von einem Objektträger zu lösen (WO 95 23 960 A1; WO 97 29 355 A1; WO 97 29 354 A1; Int. J. of Oncology 10 (1997), S. 131-139; US 42 20 273), oder um einen Objektträger aus Glas in zwei Teile zu zerschneiden (vgl. EP 0 489 290 A1).

### Nachteile des Standes der Technik

Der Nachteil der aus der DE 196 50 880 bekannten Maßnahme besteht darin, dass die vorgeschlagenen Reaktionsbehältnisse für herkömmliche Objektträger zu klein sind, eine Vergrößerung der Behältnisse aber wegen der dann notwendigen größeren Lösungsvolumina zu einem unwirtschaftlichen Betrieb führen würde. Der Nachteil der aus EP 0 489 076 und WO 94 23 326 bekannten Maßnahmen besteht darin, dass Temperatur, Lösungsmittelkonzentration und gleichmäßige Verteilung des Reagenz während der Färbe- und Waschschritte wegen des ungünstigen Verhältnisses von Lösungsvolumen (20 µl) zu Oberfläche der Reaktionskammer (größer als 2 x 2 cm²) schlecht reproduzierbar sind. Der Nachteil der Vorrichtung zum Abtrennen von Teilbereichen aus Probenträgerplatten aus Kunststoff gemäß DE 195 16 713 C1 besteht darin, dass diese Vorrichtung nicht auf Objekt- oder Probenträger aus Glas angewandt werden kann. Objektträger aus Glas sind jedoch im vorliegenden Anwendungsgebiet aus Gründen der Widerstandsfähigkeit bei der Handhabung und aus Gründen der einfachen Sterilisierbarkeit Objektträgern aus Kunststoff unbedingt vorzuziehen. Der Nachteil der Verfahren zur Ablösung von Probenbereichen besteht darin, dass sie einen dramatischen Eingriff für den zu untersuchenden Probenausschnitt darstellen. Die Verbindung mit dem Untergrund, den Nachbarzellen und der Zellen untereinander wird hierbei zerstört.

### Aufgabe der Erfindung

Eine Aufgabe der Erfindung besteht darin, objektträgergebundene biologische Proben (oder Proben aus der Materialforschung) bei wirtschaftlicher Verwendung von teuren Reagenzien auf einfache Weise der reproduzierbaren und der automatisierten biochemischen Analyse (z.B. In-situ-Hybridisierung) zugänglich zu machen.

### Lösung der Aufgabe

Die Lösung der Aufgabe erfolgt durch
eine Vorrichtung zur Herstellung von objektträgergebundenen biologischen Proben mit einem Glasschneidegerät, das in ein Lichtmikroskop integriert ist und je eine verschiebbare Halterung für einen konventionellen Objektträger (Schneidetisch) und für ein Glasschneidewerkzeug aufweist, sowie durch
ein Verfahren, mit dem aus Proben, die auf herkömmlichen Objektträgern (76 x 26 x 1 mm) aufgebracht sind, ein kleiner Teilbereich unter mikroskopischer Kontrolle ausgewählt und herausgeschnitten wird. Die dadurch entstehende Probe ist so klein bemessen, dass diese in hermetisch abgeschlossenen, auch halb- oder vollautomatisch zu betreibenden Hybridisierungsgefäßen (z.B. gemäß DE 196 50 880) weiterverarbeitet werden kann.

Ein Vorteil der Erfindung besteht darin, dass bei der sich anschließenden biochemischen Analyse mit kleinen Reagenzvolumina (z.B. 1 ml) gearbeitet werden kann, die Reaktionsbedingungen durch die Arbeit in einem geschlossenen System (z.B. entsprechend DE 196 50 880) genau kontrolliert und nahezu beliebig viele Parallelansätze gleichzeitig bearbeitet werden können. Das Schneidegerät bietet außerdem den Vorteil, dass verschiedenste mikroskopische Proben (darunter auch pathologisches Archivmaterial von Patienten) routinemäßig aufbereitet, d.h. auf herkömmliche Objektträger aufgenommen und danach optimalen In-situ-Hybridisierungs-Methoden zugänglich gemacht werden können.

### Figurenbeschreibung

Die Erfindung wird nachfolgend anhand der in den Zeichnungen dargestellten Ausführungsbeispiele näher erläutert. Es zeigen:
- Fig. 1:: die Position der Schneidevorrichtung in einem Stereomikroskop in Seitenansicht;
- Fig. 2:: einen Schneidetisch in einer perspektivischen Ansicht von vorne;
- Fig. 3:: einen Querschnitt des Objektträgerhalters auf Höhe des Objektträgers und parallel zu kürzeren Kante des Objektträgers;
- Fig. 4:: eine Aufsicht auf eine Drehscheibe des Objektträgerhalters;
- Fig. 5:: eine Schneidevorrichtung in perspektivischer Ansicht von vorne;
- Fig. 6:: eine Aufhängung des Schneiderädchens in perspektivischer Schrägansicht von vorne, und
- Fig. 7:: einen herkömmlichen Objektträger mit Beispielen für die Schnittführung (Maßstab 1:1).

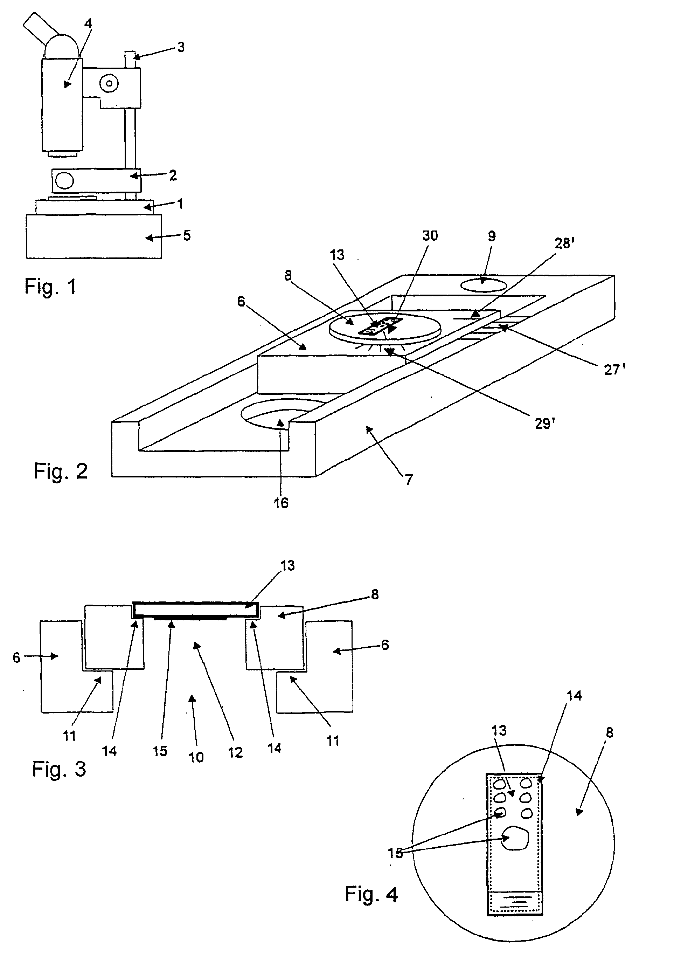

Das Objektträgerschneidegerät weist einen Schneidetisch 1 und eine Halterung 2 für ein Schneidewerkzeug auf, die zusammen auf einer Stativsäule 3 im Lichtweg zwischen dem Korpus eines Lichtmikroskopes 4 und einer Beleuchtungseinrichtung 5 angebracht sind, wie aus Fig. 1 ersichtlich.

Durch die Kopplung zwischen Schneidewerkzeug, Schneidetisch und Mikroskop wird eine präzise Koordination zwischen dem im Mikroskop gesehenen Ausschnitt und der Schnittführung ermöglicht. Die Haltevorrichtungen für den Objektträger einerseits und das Schneidewerkzeug andererseits sind, wie aus der nachfolgenden Beschreibung hervorgeht, in mindestens zwei unabhängigen Richtungen relativ zueinander verschiebbar.

Der Schneidetisch besteht aus einem rechteckigen Schlitten 6, der in einer Schiene 7 um mindestens zwei Objektträgerlängen verschoben werden kann und in sich eine Drehscheibe 8 trägt (Fig. 2). Die Schiene 7 wird in ihrem runden Loch 9 mit einer Klemmschraube an der Säule 3 des Mikroskopes 4 fixiert. Die Drehscheibe 8 sitzt in einem zentralen runden Loch 10 des Schlittens auf einer Stufe 11 und ist frei drehbar (Fig. 3). Die Drehscheibe 8 hat eine längliche Aussparung (12 in Fig. 3 und gestrichelte Linie in Fig. 4), die um etwa 1 mm kleinere Abmessungen (Länge x Breite) als die eines herkömmlichen Objektträgers 13 und eine schmale niedrige Stufe 14 aufweist, auf der der Objektträger mit einer Probe 15 nach unten ruht (Fig. 3 und 4). Der Objektträger wird in dieser Weise invertiert, damit die Probe 15 nicht bei einem Schneidevorgang (s.u.) kontaminiert wird. Die Abmessungen des runden Loches 10 im Schlitten 6 und einer Aussparung 16 in der Schiene 7 sind so gewählt, dass alle Bereiche des Objektträgers von der Beleuchtungseinrichtung des Mikroskopes durchleuchtet und geeignete Schneidestellen im Objektträger ausgesucht werden können.

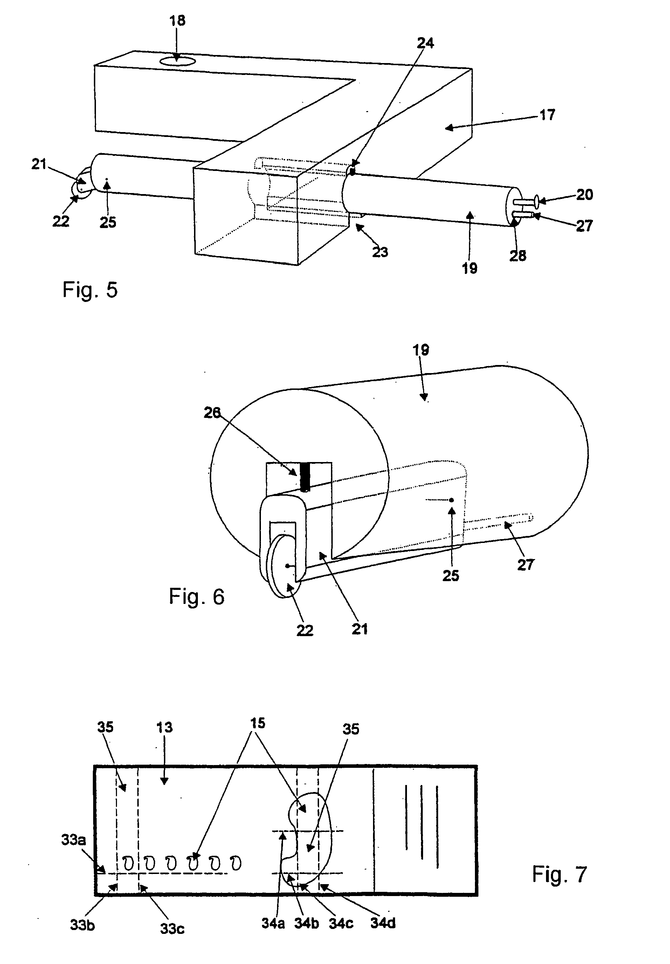

Die Schneidevorrichtung weist einen abgewinkelten Tragarm 17 auf, der an einem Ende in einem senkrechten Loch 18 an der Säule 3 des Mikroskopes fixiert wird (Fig. 5). Am anderen Ende des Tragarmes 17 wird in einem waagerechten Loch eine runde Stange 19 geführt, die an einem Ende einen Griff 20 und an dem anderen, dem senkrechten Loch 18 zugewandten Ende eine Aufhängung 21 für ein Schneiderädchen 22 trägt. Das waagerechte Loch des Tragarmes 17 hat unten eine Aussparung 23, durch die die Aufhängung 21 bewegt werden kann, und oben eine schmalere Aussparung, in der ein in die runde Stange 19 eingelassener Stift 24 läuft, um das Drehen der Stange 19 um ihre eigene Achse zu verhindern. Die Aufhängung 21 steckt in einer Aussparung der Stange 19, kann sich an einem Ende um eine waagerechte Achse 25 geringfügig auf und ab bewegen und wird am anderen Ende von der über eine Stellschraube in ihrer Andruckkraft justierbaren Feder 26 nach unten gedrückt (Fig. 5 und 6). Über eine schmale runde Stange 27, die sich in einem exzentrischen Loch 28 der Stange 19 bewegen kann und unter dem Griff 20 mindestens 1 cm aus der runden Stange herausragt, kann die Aufhängung des Schneiderädchens gegen den Druck der Feder 26 nach oben bewegt und das Schneiderädchen 22 von der zu schneidenden Glasoberfläche abgehoben werden (Fig. 6). Die dafür nötige Kraft wird gegebenenfalls durch einen am Griff 20 beweglich angebrachten kurzen Hebel aufgebracht (nicht in der Zeichnung dargestellt).

Um den zu schneidenden Bereich auf dem Objektträger 13 genau bestimmen zu können, sind der Objektträgerhalter und der Tragarm 17 des Schneidegerätes übereinander in geeignetem Abstand unterhalb der Linse des Mikroskopes 4 an der Stativsäule befestigt. In einem Okular des Mikroskopes ist in der Bildebene eine Markierung (Linie) angebracht, die den Verlauf des Schneiderädchens 22 anzeigt. Für die exakte Positionierung des Objektträgers ist auf der Schiene eine gerade Strichskala 27' und auf dem Schlitten gegenüber dieser Skala eine Markierung 28' angebracht. Des weiteren ist aus dem gleichen Grund auf dem Schlitten eine gebogene Strichskala mit Winkeleinteilung 29' und gegenüber auf der Drehscheibe eine Markierung 30 angebracht (Fig. 2).

Zur Durchführung eines Verfahrens zur Herstellung von kleinen objektträgergebundenen mikroskopischen Proben wird das Schneiderädchen 22 durch Auf- und Abbewegung der Aufhängung 21 gezielt auf ausgewählte Stellen des zu schneidenden Objektträgers 13 abgesenkt, bevor das Glas durch Ziehen oder Schieben der runden Stange 19 über die gewünschte Länge angeritzt wird. Nach dem Anritzen an bis zu 4 Seiten (s. Ritzlinien 33a-c und 34a-d in Fig. 7) eines entstehenden kleinen Objektträgerbruchstückes 35 wird der Objektträger aus der Halterung genommen und entlang der geritzten Linien in einer sterilen Petrischale über dem rechtwinkligen Rand einer geeigneten Unterlage (z.B. eines weiteren sterilen Objektträgers) mit einem geeigneten sterilen Werkzeug (z.B. Pinzette) durch leichtes Herunterdrücken gebrochen.

## Patentansprüche

1. Vorrichtung zur Herstellung von objektträgergebundenen biologischen Proben, die eine beliebig kleinere Größe aufweisen als der Objektträger selbst, **gekennzeichnet durch**
einen Schneidetisch (1) mit einer verschiebbaren Haltevorrichtung für Objektträger (13),
eine Haltevorrichtung (2) für einen verschiebbaren Glasschneider und
eine Mikroskopiereinrichtung (4) für die zu schneidende Probe (15).

2. Vorrichtung nach Anspruch 1, **dadurch gekennzeichnet, dass** der Objektträger (13) in der Haltevorrichtung drehbar ist.

3. Vorrichtung nach Anspruch 1 oder 2, **dadurch gekennzeichnet, dass** die Haltevorrichtung eine Maßeinteilung zur exakten Positionierung des Objektträgers (13) aufweist.

4. Vorrichtung nach einem der Ansprüche 1 bis 3, **dadurch gekennzeichnet, dass** eine Beleuchtungseinrichtung (5) für die Mikroskopie vorgesehen ist.

5. Vorrichtung nach Anspruch 4, **dadurch gekennzeichnet, dass** die Beleuchtungseinrichtung (5) eine Durchlichtbeleuchtung ist.

6. Vorrichtung nach einem der Ansprüche 1 bis 5, **dadurch gekennzeichnet, dass** das Okular der Mikroskopiereinrichtung (4) eine Markierung aufweist, die die Schneidlinie des Glasschneiders anzeigt.

7. Vorrichtung nach einem der Ansprüche 1 bis 6, **dadurch gekennzeichnet, dass** der Glasschneiderhalter (2) arretierbar ist.

8. Vorrichtung nach einem der Ansprüche 1 bis 7, **dadurch gekennzeichnet, dass** der Glasschneider absenkbar ist.

9. Verfahren zur Herstellung objektträgergebundener mikroskopischer Proben unter Verwendung einer Vorrichtung gemäß einem der Ansprüche 1 bis 8, **dadurch gekennzeichnet, dass** eine Probe (15) auf einem Objektträger (13) fixiert wird, der interessierende Bereich der Probe mikroskopisch ermittelt wird und ein diesen Bereich tragender Teil des Objektträgers (13) unter mikroskopischer Kontrolle ausgeschnitten wird.

10. Verfahren nach Anspruch 9, **dadurch gekennzeichnet, dass** das Verfahren in einer Sterilbox durchgeführt wird.

11. Verfahren nach Anspruch 9 oder 10, **dadurch gekennzeichnet, dass** sterile Objektträger (13) verwendet werden.

12. Verwendung objektträgergebundener Proben, hergestellt nach einem Verfahren gemäß einem der Ansprüche 9 bis 11, zur Genexpressionsanalyse, zur PCR oder zur In-Situ-Hybridisierung.

## Claims

1. A device for the production of biological samples mounted on microscope slides and of any size smaller than the slide, **characterized in**
a cutting table (1) with an adjustable holder for slides (13),
a holding device (2) for an adjustable glass cutter,
a microscopic device (4) for the sample which is to be cut (15).

2. A device according to claim 1, **characterized in that** the slide (13) can be rotated within the holding device.

3. A device according to claims 1 and 2, **characterized in that** the holding device is equipped with a calibration for the exact positioning of the slide (13).

4. A device according to one of claims 1 to 3, **characterized in** an illumination fitting (5) for microscopic analysis.

5. A device according to claim 4, **characterized in that** the illumination fitting (5) is a transmitting-light appliance.

6. A device according to claims 1 to 5, **characterized in that** the eye piece of the microscope (4) carries a marking which indicates the cutting line of the glass cutter.

7. A device according to one of claims 1 to 6, **characterized in that** the glass cutter (2) is lockable.

8. A device according to one of claims 1 to 7, **characterized in that** the glass cutter can be lowered.

9. A process for the production of microscopical samples mounted on microscope slides according to one of claims 1 to 8, **characterized in that** a sample (15) is mounted on a slide (13), that the area of interest of the sample is microscopically located, and that the part of the slide (13) carrying this area is cut out under microscopical control.

10. A process according to claim 9, **characterized in that** it is carried out under a sterile hood.

11. A process according to claim 9 or 10, **characterized in that** sterile slides (13) are used.

12. Use of samples on microscope slides produced by a process according to one of claims 9 to 11, with the aim of carrying out gene expression analysis, PCR or in situ hybridisation.

## Revendications

1. Dispositif pour la production d'échantillons biologiques de toute taille inférieure à la lame de microscope, et **caractérisé par** :
Une table à découper (1) équipée d'un dispositif de fixation ajustable pour lame de microscope (13),
Un dispositif de fixation (2) pour un appareil réglable à découper le verre, et
Un équipement de microscopie (4) pour l'échantillon à couper (15).

2. Installation conforme à la revendication 1, **caractérisée par le fait que** la lame de microscope (13) a la possibilité de tourner à l'intérieur du dispositif de fixation.

3. Installation conforme aux revendications 1 ou 2, **caractérisée par le fait que** le dispositif de fixation présente une graduation permettant de positionner exactement la lame de microscope (13).

4. Installation conforme à une des revendications 1 à 3, **caractérisée par le fait qu'**un dispositif d'éclairage (5) pour la microscopie est prévu.

5. Installation conforme à la revendication 4, **caractérisée par** un dispositif d'éclairage à transmission.

6. Dispositif conforme à une des revendications 1 à 5, **caractérisé par le fait que** l'oculaire du dispositif de microscopie (4) présente un marquage exhibant la ligne de coupe de l'appareil coupe-verre.

7. Dispositif, conforme à une des revendications 1 à 6, **caractérisé par le fait que** le support du coupe-verre (2) peut être bloqué.

8. Dispositif conforme à une des revendications 1 à 7, **caractérisé par le fait que** l'on peut abaisser le coupe-verre.

9. Procédé pour la préparation d'échantillons sur lame de microscope par utilisation d'un dispositif conforme à un des revendications 1 à 8, **caractérisé par le fait que** l'échantillon (15) est fixé sur une lame de microscope (13), que la zone d'intérêt de l'échantillon est déterminée au microscope et qu'une partie de la zone concernée de la lame de microscope (13) est découpée sous contrôle microscopique.

10. Procédé conforme à la revendication 9, **caractérisé par le fait que** le procédé peut être exécuté dans une boîte stérile.

11. Procédé conforme aux revendications 9 ou 10, **caractérisé par le fait que** l'on peut utiliser des lames de microscope (13) stériles.

12. Utilisation d'échantillons sur lame de microscope, produits par l'un des procédés décrits et conformes à une des revendications 9 à 11, pour l'analyse d'expression de gènes, la PCR ou l'hybridation in situ.
